# EUROPEAN PATENT APPLICATION

(11) **EP 0 636 829 A1**
(43) Date of publication of application: **01.02.1995**
(21) Application number: 93202222.1
(22) Date of filing: 26.07.1993
(51) Int. Cl.: F16L 59/16, F16L 59/20

(54) **Coupling of conduits having an insulating jacket, and a cap for same**

(71) Applicant: N.V. PGEM, NL-6812 AH Arnhem (NL)
(72) Inventor: Vink, Wilhelmus Gerardus, NL-8242 CS Lelystad (NL)
(74) Representative: Prins, Hendrik Willem

(57) **Abstract**

The invention relates to a coupling (1) of at least two conduits (3,4) provided with an insulating jacket (5), comprising a joint between the two conduits (3,4) with connecting, exposed conduit portions and a form-retaining, insulating cap (15) which encloses the joint, the exposed conduit portions (3,4) and adjacent conduit jacket portions (5).

## Description

The present invention relates to a coupling of at least two conduits provided with an insulating wall and to a cap for such a coupling.

During coupling of conduits provided with an insulating jacket a portion of the jacket is removed, whereafter, in the case of metal conduits portions, these conduit portions are welded to each other. A drawback to the use of for instance a copper-silver solder joint is that for a period of time (about one month) the formed joint has insufficient rigidity. Relative movements between the conduits can lead to deformation and even to leakage.

When one or both conduit portions consist of plastic, it is recommended for obtaining a reliable joint that a relative movement between the conduits at the position of the joint is permanently eliminated.

The invention has for its object to provide a coupling for such conduits provided with an insulating jacket, wherein after forming of the connection a relative displacement between the conduits at the position of the joint is excluded and in addition the insulating properties not only remain the same but are preferably improved.

This is achieved according to the invention by a coupling according to the invention which is provided with at least two conduits provided with an insulating jacket, comprising a joint between the two conduits with connecting, exposed conduit portions and a form-retaining, insulating cap which encloses the joint, the exposed conduit portions and adjacent conduit jacket portions. Because the cap fixes the connected conduits therein substantially without movement and the cap itself is form-retaining, the relative movement between the conduits thereby becomes impossible.

Although the cap can be formed around the conduits at the position of the joint, it is recommended that the cap is constructed from two cap parts, whereby the joint remains accessible at all times. The production cost of the cap, for example by injection moulding, is greatly reduced if more preferably the cap parts have substantially the same form. An optimal fixation of the conduits in the cap is realized when the cap is provided with a cap cavity receiving a conduit jacket, a cavity wall of which is provided with a clamping profile.

An optimally insulated and water-sealing coupling is obtained when in further preference the cap parts are provided along the periphery of their contact surface with complementary coupling elements.

A rapid and guaranteed fixing of the cap parts is obtained if more preferably the cap parts are mutually fastened with tensioning pins. The fastening can be realized quickly when herein the tensioning pin and its tensioning pin foot are provided with a co-acting locking profile. If desired, the connection can be broken quickly and easily without thereby damaging the cap, when in further preference the locking profile is incorporated in a spout of the tensioning pin foot, since at the position of the spout a separation is made between the spout and the remaining part of the tensioning pin foot.

A very well insulating and water-sealing coupling is obtained when more preferably the cap parts are provided on their contact surface with a sealing mastic.

A coupling according to the invention is not only usable in the case of conduits lying mutually in line but can also be used for conduits lying transversely of each other. In principle the coupling can be used even with four mutually connected conduits lying transversely of each other.

Finally, the present invention relates to a cap for such a coupling for enclosing in insulating and form-retaining manner conduits provided with an insulating jacket and mutually connected via a joint.

Mentioned and other features of the coupling and cap according to the invention will be elucidated hereinbelow in the light of a number of embodiments given by way of example, wherein reference is made to the annexed drawing.

In the drawing:
figure 1 is a schematic view of the diverse steps for forming a joint between two conduits;
figure 2 is an exploded perspective view showing the arranging of the cap in the situation shown in figure 1;
figure 3 shows on a larger scale in side view a tensioning pin with associated tensioning pin foot (in section); and
figure 4 shows another embodiment of the coupling shown in figures 1 and 2.

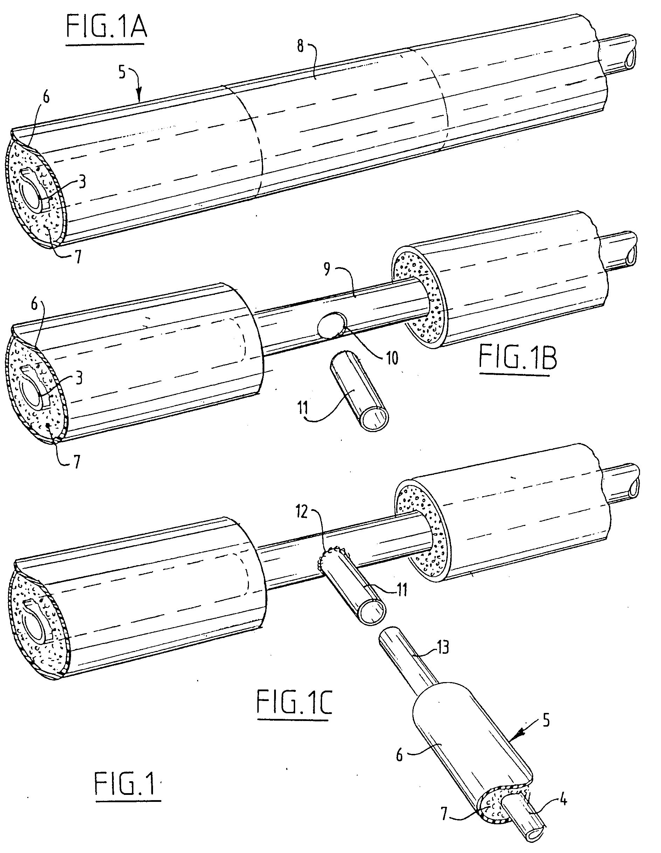

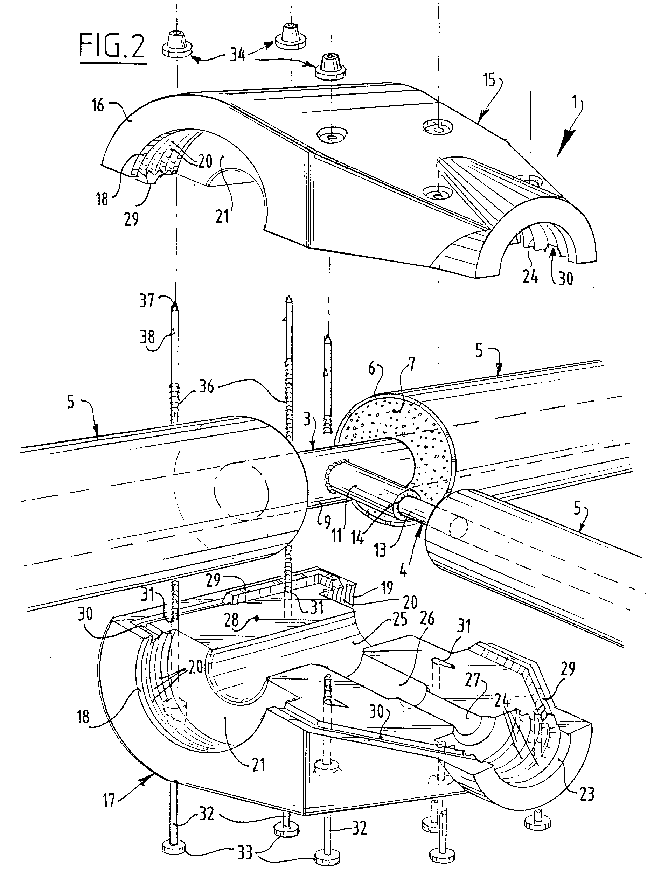

Figures 1 and 2 show the forming of a coupling 1 according to the invention between two metal conduits 3 and 4 each provided with an insulating jacket 5 which consists in this case of a closed and watertight outer jacket 6 of polyethylene and a layer of polyurethane foam 7 enclosed thereby.

As shown in figure 1A, a section 8 of the jacket is removed and in the exposed conduit portion 9 a hole 10 is bored in which a conduit end part 11 is welded via a weld seam 12. The conduit end part 11 has an internal diameter such that conduit 4 can slide fittingly therein (figure 1C). The exposed conduit portion 13 is subsequently pushed into conduit end part 11 and soldered therein with copper-silver solder 14.

Both the exposed conduit portions 9 and 13 and the conduit end part 11 are then enclosed in a form-retaining, insulating cap 15 which is manufactured by injection moulding of polyurethane.

Cap 15 comprises two cap parts 16 and 17 having the same form. Both comprise a cap cavity part 18, 19, the wall of which is provided with a clamping profile 20. The jacket 5 of conduit 3 is clamped into the clamping cavities, wherein the jackets rest against the end walls 21, 22.

Cap parts 16, 17 are further provided with cap cavity portions 22, 23 with an associated profile 24 for clampingly receiving therein the jacket 5 of conduit 4.

Further present in the cap parts are recesses 25-27 in which the conduit portion 9, conduit end part 11 and conduit portion 13 are close-fittingly received.

Finally, the contact surface 28 of both cap-parts 16, 17 is provided on its periphery with complementary coupling means in the form of a tongue 29 and a groove 30, wherein the grooves 30 and the clamping profiles 20, 24 are also provided with sealing mastic (not shown).

With tensioning pins 32 placed through holes 31 both cap parts 16, 17 are pulled releasably against each other between the tensioning pin head 33 and a tensioning pin foot 34 while enclosing the exposed portions of the conduits 3 and 4 in form-retaining and insulating manner.

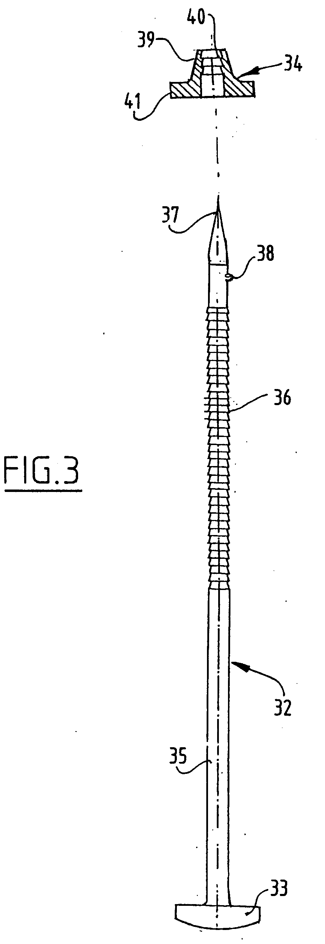

Figure 3 shows in more detail a tensioning pin 32 manufactured from plastic and provided with a tensioning pin head 33 and a stem 35 which transposes into a tip 37 via a saw tooth-like locking profile 36. Present between locking profile 36 and tip 37 is a protrusion 38 which prevents undesired release of the tensioning pin foot 34 placed on the tip 37.

The tensioning pin foot 34 is provided with a spout 39 in which is arranged the co-acting locking profile 40. When the tensioning pin foot has to be removed it is sufficient to remove the spout 39 from the annular base 41 by cutting, whereafter this base is easy to remove.

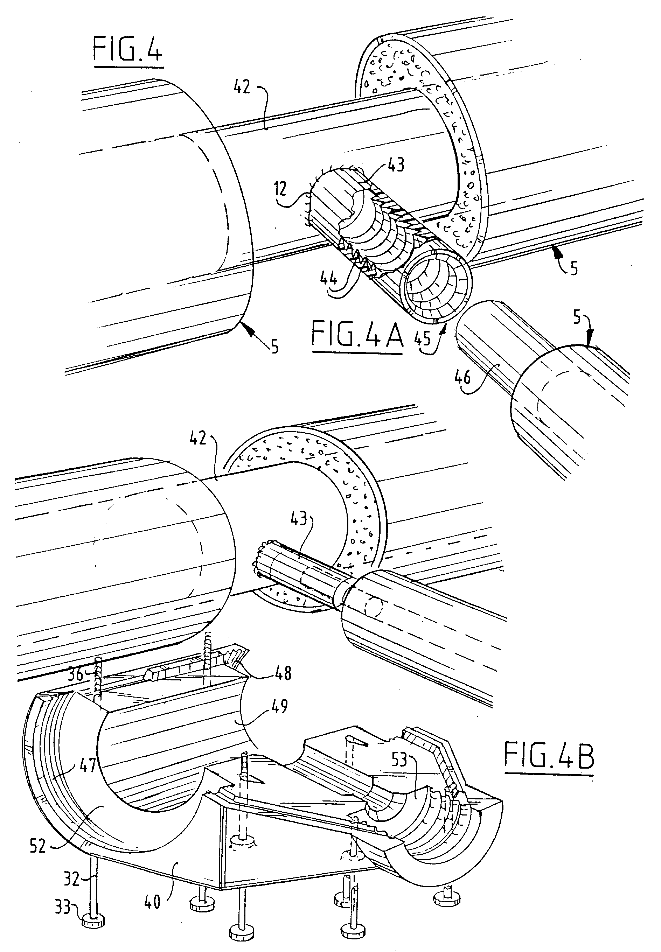

Figure 4 shows a similar situation, wherein now the conduit 42 has a larger diameter than conduit 3, and the welded-on conduit end part 43 is provided with a cylindrical insert piece 45 which is provided with a toothing 44 and into which the plastic conduit 46 can be received so as to be locked against axial displacement out of the insert piece.

It can be further noted that the cap part 46 has the same outside measurements as cap part 17 of figure 2.

Only the cavity parts 47 and 48 and the recess 49 now have a larger diameter. The groove 50 and the tongue 51 are therefore also smaller.

The wall 52 and the wall 53 lie however at the same distance from the outer surface as the same walls of cap part 17 in figure 2.

## Claims

1. Coupling of at least two conduits provided with an insulating jacket, comprising a joint between the two conduits with connecting, exposed conduit portions and a form-retaining, insulating cap which encloses the joint, the exposed conduit portions and adjacent conduit jacket portions.

2. Coupling as claimed in claim 1, wherein the cap is constructed from two cap parts.

3. Coupling as claimed in claim 2, wherein the cap parts have substantially the same form.

4. Coupling as claimed in claims 1-3, wherein the cap is provided with a cap cavity receiving a conduit jacket, a cavity wall of which is provided with a clamping profile.

5. Coupling as claimed in claims 2-4, wherein the cap parts are provided along the periphery of their contact surface with complementary coupling elements.

6. Coupling as claimed in claims 2-5, wherein the cap parts are mutually fastened with tensioning pins.

7. Coupling as claimed in claim 6, wherein the tensioning pin and its tensioning pin foot are provided with a co-acting locking profile.

8. Coupling as claimed in claim 7, wherein the locking profile is incorporated in a spout of the tensioning pin foot.

9. Coupling as claimed in claims 2-7, wherein the cap parts are provided on their contact surface with a sealing mastic.

10. Coupling as claimed in claims 1-9, wherein the two conduits lie transversely of each other.

11. Cap as claimed in claims 1-10 for enclosing in insulating and form-retaining manner conduits provided with an insulating jacket and mutually connected via a joint.
